# EUROPEAN PATENT SPECIFICATION

(11) **EP 3 764 193 B1**
(45) Date of publication and mention of the grant of the patent: **05.04.2023**
(21) Application number: 19763880.2
(22) Date of filing: 20.02.2019
(51) Int. Cl.: G05G 1/04, B23B 45/00, B25F 5/02, B25B 13/46, B25B 33/00, G05G 1/08

(54) **HANDLE DEVICE AND PUNCHING MACHINE**
GRIFFVORRICHTUNG UND STANZMASCHINE
DISPOSITIF À MAIN ET PERFORATRICE

(30) Priority: 08.03.2018 JP 2018042375
(43) Date of publication of application: 13.01.2021
(73) Proprietor: Nitto Kohki Co., Ltd., Tokyo 146-8555 (JP)
(72) Inventor: YOKOYAMA, Toshiki, Tokyo 146-8555 (JP)
(74) Representative: Schmidbauer, Andreas Konrad
(86) International application number: PCT/JP2019/006270
(87) International publication number: WO 2019/171950

(56) References cited:
- CH-A5- 560 930
- CN-Y- 201 035 443
- CN-Y- 201 035 443
- JP-A- 2006 043 833
- US-A- 4 037 488
- US-A1- 2009 151 503

## Description

### Technical Field:

The present invention relates to a handle device and a drilling machine. More particularly, the present invention relates to a handle device according to the preamble of claim 1 configured to make it possible to uncouple a rotating shaft member and a handle member from each other and to recouple the handle member to the rotating shaft member at a different angle, and also relates to a drilling machine including such a handle device. Such a drilling device and such a drilling machine are known from CN 201 035 443 Y.

### Background Art:

With a drilling machine disclosed in Patent Literature 1, for example, a drilling operation is performed by bringing an annular cutter toward and away from a workpiece by rotating a handle device. This drilling machine is relatively small in size, and the distance from the center of rotation of the handle device to the installation surface is short. Therefore, the handle device, when rotated, may strike the installation surface and become unable to be rotated further in that position. Accordingly, the handle device of the drilling machine is configured to enable a handle member to be recoupled to a rotating shaft member at a different angle. Thus, the annular cutter can be moved continuously.

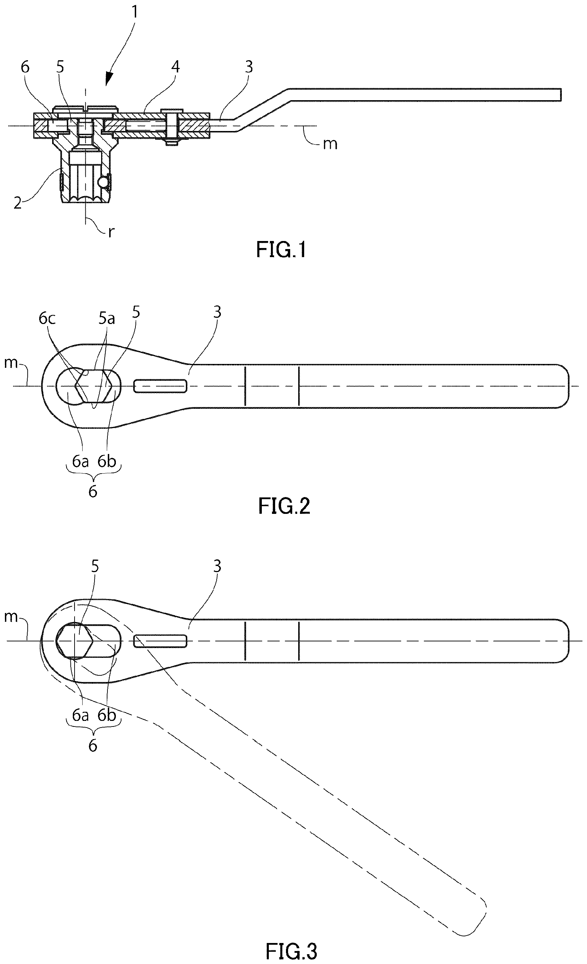

Figs. 1 to 3 show the detailed structure of the handle device in the above-described drilling machine. That is, the handle device 1 has a rotating shaft member 2 having a socket structure, which is detachably coupled to the drilling machine. The handle device 1 further has a handle member 3 for rotating the rotating shaft member 2, and a holding member 4 rotatably holding the rotating shaft member 2 and also holding the handle member 3 slidably in the direction of a longitudinal axis m substantially perpendicular to the rotation axis r of the rotating shaft member 2. The rotating shaft member 2 has a coupling engaging portion 5 having a regular hexagonal shape, and the handle member 3 has a coupling hole 6 receiving the coupling engaging portion 5. The coupling hole 6 comprises a circular hole portion 6a having a diameter slightly larger than the distance (diagonal distance) between two angles at diagonal positions of the coupling engaging portion 5, and a slot portion 6b having a width narrower than the diagonal distance and slightly wider than the distance (width across flat) between two parallel surfaces of the coupling engaging portion 5. As shown in Fig. 2, when the coupling engaging portion 5 is received in the slot portion 6b of the coupling hole 6, two surfaces 5a of the coupling engaging portion 5 engage side surfaces 6c, respectively, of the slot portion 6b. Consequently, the handle member 3 and the rotating shaft member 2 are coupled to each other in the direction of rotation, and thus the rotating shaft member 2 can be rotated by rotating the handle member 3. When the handle member 3 in the coupled position is pulled as shown in Fig. 3 to a position where the coupling engaging portion 5 is received in the circular hole portion 6a of the coupling hole 6, the handle member 3 and the rotating shaft member 2 are uncoupled from each other, and the handle member 3 becomes freely rotatable relative to the rotating shaft member 2. In this uncoupled position, the handle member 3 is rotated relative to the rotating shaft member 2 and moved so as to receive the coupling engaging portion 5 in the slot portion 6b at another angle, thereby allowing the handle member 3 to be recoupled to the rotating shaft member 2 at another angle. Because the coupling engaging portion 5 has a regular hexagonal shape, the handle member 3 can be coupled to the rotating shaft member 2 in six different directions at intervals of 60 degrees.

### Citation List:

### Patent Literature:

Patent Literature 1: Japanese Patent No. 3963910

### Summary of Invention:

### Technical Problem:

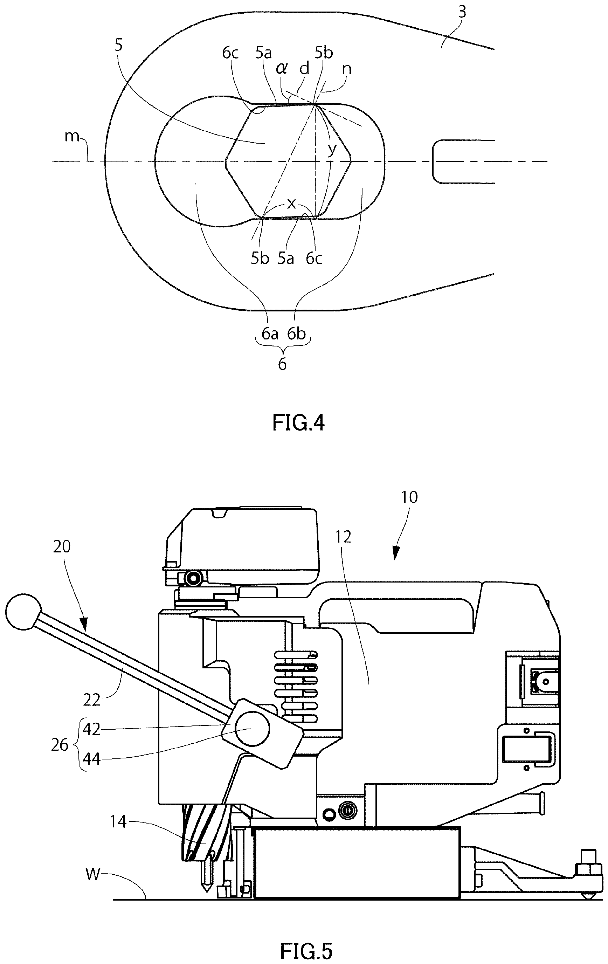

When performing a drilling operation with an annular cutter, it is necessary to press the rotating annular cutter against a workpiece with a certain degree of force, and the force is applied by pressing the handle member 3 in the direction of rotation. The coupling between the handle member 3 and the rotating shaft member 2 is achieved by the engagement between the coupling hole 6 and the coupling engaging portion 5, as has been described above. Therefore, the force pressing the handle member 3 is received at contact points between the coupling hole 6 and the coupling engaging portion 5. The width between the side surfaces 6c of the slot portion 6b of the coupling hole 6 is, usually, set slightly larger than the width across flat of the coupling engaging portion 5 in order for the slot portion 6b to receive the coupling engaging portion 5 smoothly. Accordingly, when the handle member 3 in the coupled position is rotated, for example, clockwise as seen in the figure relative to the rotating shaft member 2, as shown in Fig. 4, the side surfaces 6c of the slot portion 6b are slightly inclined relative to the engaging surfaces 5a of the coupling engaging portion 5. Consequently, the coupling engaging portion 5 contacts the side surfaces 6c of the slot portion 6b at two angle portions 5b located at diagonal positions. Accordingly, as the handle member 3 is actuated repeatedly, the angle portions 5b of the coupling engaging portion 5 and the side surfaces 6c of the slot portion 6b that are contacted by the angle portions 5b may be worn or hollowed and gradually deformed. Here, the distance y between the contacting angle portions 5b in a direction perpendicular to the longitudinal axis m is longer than the distance x between the angle portions 5b in the direction of the longitudinal axis m, and the direction d in which the angle portions 5b are pressed against the side surfaces 6c of the slot portion 6b is at a relatively small angle α with respect to the side surfaces 6c. The direction d in which the angle portions 5b are pressed against the side surfaces 6c coincides with a direction perpendicular to a diagonal line n passing through the contacting angle portions 5b. In the handle member 3 having the regular hexagonal coupling engaging portion 5, the angle α of the direction d with respect to the longitudinal axis m is approximately 30 degrees. As the angle α becomes smaller, the angle at which the angle portions 5b are pressed against the side surfaces 6c of the slot portion 6b becomes more acute, and the angle portions 5b or the side surfaces 6c of the slot portion 6b become more likely to be deformed. In addition, when deformation occurs, there will be an increase in the degree of backlash of the handle member 3 relative to the rotating shaft member 2 with respect to the amount of deformation. When the amount of deformation exceeds a certain extent, the coupling engaging portion 5 cuts into the slot portion 6b, which may also result in a problem that the handle member 3 and the rotating shaft member 2 cannot be uncoupled successfully. If the shape of the coupling engaging portion 5 is changed to a regular polygon having a larger number of sides, e.g. a regular octagon or a regular decagon, in order to enable the angle of coupling between the handle member 3 and the rotating shaft member 2 to be changed at finer intervals, the engaging surfaces become small, so that the coupling engagement between the handle member 3 and the rotating shaft member 2 becomes unstable. In addition, the direction d in which the angle portions 5b of the coupling engaging portion 5 are pressed against the side surfaces 6c of the slot portion 6b is at an even smaller angle, and the above-described problem is more likely to occur.

Accordingly, an object of the present invention is to provide a handle device in which deformation is unlikely to occur at points of contact between a handle member and a rotating shaft member, and even if deformation occurs, it is possible to suppress the effect of the deformation on the backlash between the handle member and the rotating shaft member. Another object of the present invention is to provide a drilling machine including the handle device of the present invention.

### Solution to Problem:

The present invention provides a handle device according to claim 1 including a holding member, a handle member having a shaft part held by the holding member displaceably in a direction of a longitudinal axis, and a rotating shaft member held by the holding member rotatably about a rotation axis substantially perpendicular to the longitudinal axis, the rotating shaft member having a coupling end face facing the shaft part of the handle member, the rotating shaft member having in the coupling end face a coupling recess extending in a radial direction about the rotation axis. The handle member has on the shaft part a coupling engaging portion engageable with the coupling recess. The handle member is displaceable between a coupled position where the coupling engaging portion is engaged with the coupling recess at positions at opposite sides of the rotation axis in the direction of the longitudinal axis, thereby allowing the handle member to be coupled to the rotating shaft member in a direction of rotation of the rotating shaft member, and an uncoupled position where the handle member is displaced from the coupled position in the direction of the longitudinal axis to uncouple the coupling engaging portion and the coupling recess from each other, thereby enabling the handle member to be rotated relative to the rotating shaft member about the rotation axis.

In the handle device of the present invention, the rotating shaft member is provided with a coupling recess, and the handle member is provided with a coupling engaging portion. The coupling engaging portion of the handle member is engageable with the coupling recess of the rotating shaft member. With this structure, the coupling engaging portion need not be formed into a regular polygonal shape, and the coupling engaging portion and the coupling recess can be configured to extend long in the direction of the longitudinal axis. Consequently, the coupling engaging portion and the coupling recess can be pressed against each other in a direction extending at a relatively large angle to the surfaces of the coupling recess. Accordingly, deformation is unlikely to occur at the points of contact between the coupling engaging portion and the coupling recess, and even if deformation occurs, it is possible to reduce the effect of the deformation on the backlash between the handle member and the rotating shaft member. Further, in order to allow the handle member to be coupled to the rotating shaft member in a larger number of different directions, it is only necessary to provide a plurality of coupling recesses of similar configuration. Therefore, it is also possible to increase the number of couplable directions without reducing the above-described angle.

Specifically, the arrangement may be as follows. The handle member further has on the shaft part an uncoupling portion not engageable with the coupling recess. The coupling engaging portion has first and second coupling engaging portions located away from each other in the direction of the longitudinal axis. The uncoupling portion has a first uncoupling portion located between the first coupling engaging portion and the second coupling engaging portion. The rotating shaft member has an uncoupling recess. The coupling recess is a pair of coupling recesses located at opposite sides of the uncoupling recess. When the handle member is in the coupled position, the first coupling engaging portion is engaged with one coupling recess of the pair of coupling recesses, and the second coupling engaging portion is engaged with the other coupling recess of the pair of coupling recesses. When the handle member is displaced to the uncoupled position, the second coupling engaging portion is disengaged from the other coupling recess and positioned to align with the uncoupling recess in the direction of the rotation axis, and the first uncoupling portion is positioned to align with the one coupling recess in the direction of the rotation axis.

With the above-described structure, the amount of displacement of the handle member when displaced between the coupled position and the uncoupled position is reduced, so that the operation of coupling and uncoupling the handle member and the rotating shaft member can be performed even more rapidly.

Specifically, the arrangement may be as follows. The uncoupling portion further has a second uncoupling portion located opposite the first uncoupling portion across the second coupling engaging portion. The shaft part has, in order along the longitudinal axis, a first sliding portion slidably held by the holding member, the first coupling engaging portion, the first uncoupling portion, the second coupling engaging portion, the second uncoupling portion, and a second sliding portion slidably held by the holding member. When the handle member is displaced to the uncoupled position, the second uncoupling portion is positioned to align with the other coupling recess in the direction of the rotation axis.

With the above-described structure, the shaft part of the handle member is supported by the holding member at both sides of the rotation axis. Accordingly, the handle member can be supported even more stably.

Specifically, the arrangement may be as follows. The first sliding portion and the first coupling engaging portion have the same outer diameter, and the second sliding portion and the second uncoupling portion have the same outer diameter. When the handle member is in the coupled position, the second uncoupling portion is slidably held by the holding member, whereas when the handle member is in the uncoupled position, the first coupling engaging portion is slidably held by the holding member.

Preferably, the arrangement may be as follows. The first coupling engaging portion of the handle member has an inclined surface with a diameter gradually decreasing toward the first uncoupling portion, so that when the handle member is displaced from the uncoupled position to the coupled position in a state where the coupling recess is deviated from the direction of the longitudinal axis of the shaft part, the inclined surface is slidingly engaged with the coupling recess, causing the handle member to rotate relative to the rotating shaft member, thereby allowing the coupling engaging portion to be guided into the coupling recess.

With the above-described structure, even if the shaft part of the handle member and the position of the coupling recess of the rotating shaft member are somewhat deviated from each other, the handle member can be displaced from the uncoupled position to the coupled position. Accordingly, the operability of the handle member is improved.

Specifically, the arrangement may be as follows. When the handle member is rotated about the rotation axis in the coupled position, a contact point between the coupling engaging portion and the coupling recess at one side of the rotation axis in the direction of the longitudinal axis and a contact point between the coupling engaging portion and the coupling recess at the other side of the rotation axis in the direction of the longitudinal axis are located at respective positions where the distance between the contact points in a direction perpendicular to the longitudinal axis is shorter than the distance between the contact points in the direction of the longitudinal axis.

Preferably, the handle device may further include a spring urging the handle member toward the coupled position.

Thus, the handle member is held in the coupled position by the spring. Therefore, it is possible to suppress the handle member from being accidentally displaced to the uncoupled position when the handle member is rotated.

Preferably, the handle device may further include a plurality of the coupling recesses respectively extending in mutually different radial directions about the rotation axis.

The provision of a plurality of coupling recesses makes it possible to couple the handle member to the rotating shaft member at a larger number of different angles and hence possible to improve the operability of the handle device.

Specifically, the arrangement may be as follows. The rotating shaft member has a rotating shaft body portion extending in the direction of the rotation axis, and a flange portion having a diameter enlarged radially outward from the rotating shaft body portion to constitute a part of the coupling end face. The holding member includes a housing member having a rotating shaft holding hole extending therethrough in the direction of the rotation axis to rotatably hold the rotating shaft member, and a handle member holding hole extending therethrough in the direction of the longitudinal axis across the rotating shaft holding hole to hold the shaft part of the handle member displaceably in the direction of the longitudinal axis. The rotating shaft holding hole has a large-diameter portion receiving the flange portion, and a small-diameter portion having a diameter smaller than that of the flange portion but sufficiently large to pass the rotating shaft body portion therethrough. The holding member further includes a cap member inserted into the large-diameter portion of the rotating shaft holding hole to close one opening of the rotating shaft holding hole and to hold the flange portion of the rotating shaft member in the large-diameter portion. The cap member has an insertion groove extending in the direction of the longitudinal axis. The shaft part of the handle member is disposed to extend through the insertion groove. The shaft part is engaged with the insertion groove in the direction of the rotation axis, thereby preventing the cap member from coming off from the one opening side of the rotating shaft holding hole.

With the above-described structure, the assembling operation of the handle device can be facilitated. Specifically, first, the rotating shaft member is inserted into the rotating shaft holding hole of the housing member. Next, the cap member is inserted into the rotating shaft holding hole. Subsequently, the handle member is attached to the housing member so as to extend through the insertion groove of the cap member, thereby allowing the assembling operation to be almost completed.

In addition, the present invention provides a drilling machine according to claim 10 including a drilling machine body, a drilling tool attached to the drilling machine body, and the above-described handle device which is attached to the drilling machine body, so that the drilling tool is displaced by rotating the handle member in the coupled position.

Embodiments of a drilling machine and handle device according to the present invention will be explained below on the basis of the accompanying drawings.

### Brief Description of Drawings:

Fig. 1 is a partially sectioned view of a handle device in a conventional drilling machine.
Fig. 2 is a plan view of the conventional handle device in Fig. 1, which is in a coupled position.
Fig. 3 is a plan view of the conventional handle device in Fig. 1, which is in an uncoupled position. It should be noted that a handle member rotated relative to a rotating shaft member is shown by the broken lines.
Fig. 4 is an enlarged view showing the area of coupling between the rotating shaft member and the handle member in the conventional handle device shown in Fig. 1.
Fig. 5 is a side view of a drilling machine according to an embodiment of the present invention.
Fig. 6 is a side view of a handle device according to an embodiment of the present invention, which is attached to the drilling machine shown in Fig. 5.
Fig. 7 is an enlarged sectional view of the handle device in Fig. 6, which is in a coupled position.
Fig. 8 is a sectional view taken along the line A-A in Fig. 7.
Fig. 9 is a perspective view of the handle device in Fig. 6, which is in the coupled position, the figure showing the area of coupling between a rotating shaft member and a handle member, with a holding member and a spring omitted.
Fig. 10 is an illustration showing the positions of engagement between coupling engaging portions of the handle member and a coupling recess of the rotating shaft member.
Fig. 11 is an enlarged sectional view of the handle device in Fig. 6, which is in an uncoupled position.
Fig. 12 is a perspective view of the handle device in Fig. 6, which is in the uncoupled position, the figure showing the area of coupling between the rotating shaft member and the handle member, with the holding member and the spring omitted.

### Description of Embodiments:

As shown in Fig. 5, a drilling machine 10 according to an embodiment of the present invention includes a drilling machine body 12, an annular cutter (drilling tool) 14 attached to an arbor (not shown) of the drilling machine body 12, and a handle device 20 attached to the drilling machine body 12. The handle device 20 is drivably coupled to the arbor through a gear mechanism (not shown) incorporated in the drilling machine body 12. When the handle device is rotated counterclockwise as seen in the figure, the annular cutter 14, together with the arbor, moves closer to a workpiece W, whereas when the handle device 20 is rotated clockwise, the annular cutter 14 moves away from the workpiece W. To perform a drilling operation with the drilling machine 10, the annular cutter 14 is driven to rotate by a motor (not shown) incorporated in the drilling machine body 12, and the rotating annular cutter 14 is pressed against the workpiece W by actuating the handle device 20.

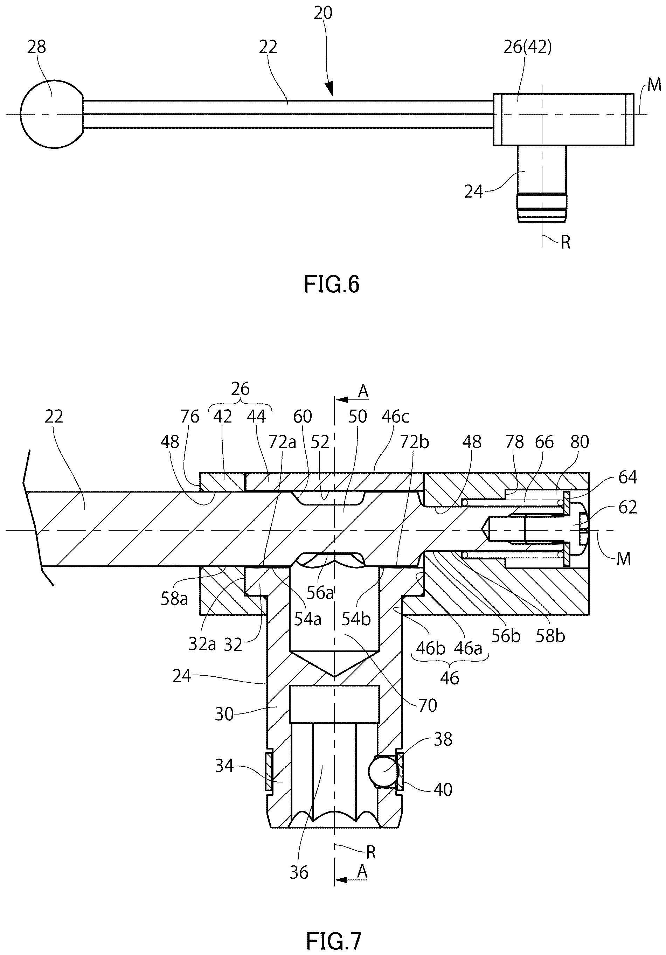

The handle device 20 includes, as shown in Fig. 6, a handle member 22, a rotating shaft member 24, and a holding member 26. The holding member 26 holds the handle member 22 displaceably in the direction of a longitudinal axis M and also holds the rotating shaft member 24 rotatably about a rotation axis R substantially perpendicular to the longitudinal axis M. The handle member 22 has a spherical grip 28 attached to one end thereof for a worker to grip when actuating the handle member 22.

The rotating shaft member 24 has, as shown in Fig. 7, a rotating shaft body portion 30 extending in the direction of the rotation axis R, and a flange portion 32 having a diameter enlarged radially outward at the upper end of the rotating shaft body portion 30. The rotating shaft body portion 30 has a lower end portion 34 formed into a socket structure. Specifically, the socket structure has a hexagonal socket hole 36 configured to receive a hexagonal column-shaped rotational drive shaft provided in the drilling machine 10, a spherical locking element 38 disposed to project into the socket hole 36, and an annular plate spring 40 holding the spherical locking element 38 from the outside. When the spherical locking element 38 is engaged with a locking groove provided in the rotational drive shaft of the drilling machine 10, the handle device 20 is coupled to the rotational drive shaft. When the rotating shaft member 24 is pulled out from the rotational drive shaft, the spherical locking element 38 is displaced outward against the urging force of the plate spring 40 to uncouple the handle device 20 from the rotational drive shaft, thereby allowing the handle device 20 to be removed from the drilling machine body 12.

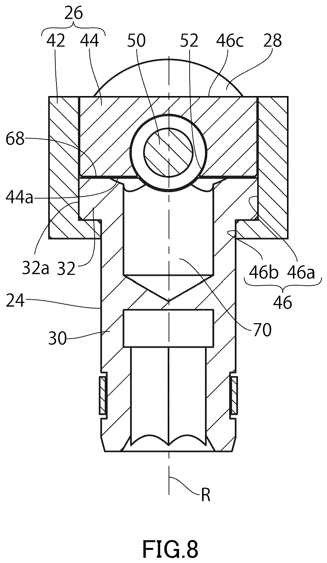

The holding member 26 comprises, as shown in Figs. 7 and 8, a housing member 42 and a cap member 44. The housing member 42 is formed with a rotating shaft holding hole 46 extending therethrough in the direction of the rotation axis R to rotatably hold the rotating shaft member 24, and a handle member holding hole 48 extending therethrough in the direction of the longitudinal axis M to hold the handle member 22 displaceably in the direction of the longitudinal axis M. The rotating shaft holding hole 46 has a large-diameter portion 46a having a diameter slightly larger than that of the flange portion 32 of the rotating shaft member 24, and a small-diameter portion 46b having a diameter smaller than that of the flange portion 32 and slightly larger than that of the rotating shaft body portion 30. The rotating shaft member 24 is held in such a way that the flange portion 32 is received in the large-diameter portion 46a of the rotating shaft holding hole 46 and that the rotating shaft body portion 30 extends to the outside from the housing member 42 through the small-diameter portion 46b. The handle member holding hole 48 extends across the large-diameter portion 46a of the rotating shaft holding hole 46. The cap member 44 is a circular column-shaped member having a diameter slightly smaller than that of the rotating shaft holding hole 46 and has an insertion groove 52 through which a shaft part 50 of the handle member 22 extends. The cap member 44 is inserted into the rotating shaft holding hole 46 to close one opening 46c of the rotating shaft holding hole 46. The cap member 44 has a lower surface 44a engaged with the flange portion 32 of the rotating shaft member 24 to hold the position of the cap member 44 in the direction of the rotation axis R of the rotating shaft member 24. As shown in Fig. 8, the insertion groove 52 of the cap member 44 is configured to cover more than half of the circumference of the shaft part 50 of the handle member 22 so as to engage the shaft part 50 also from below. The engagement of the shaft part 50 with the insertion groove 52 in the direction of the rotation axis R makes it possible to hold the position of the cap member 44 in the direction of the rotation axis R, so that the cap member 44 is prevented from coming off from the one opening 46c side of the rotating shaft holding hole 46.

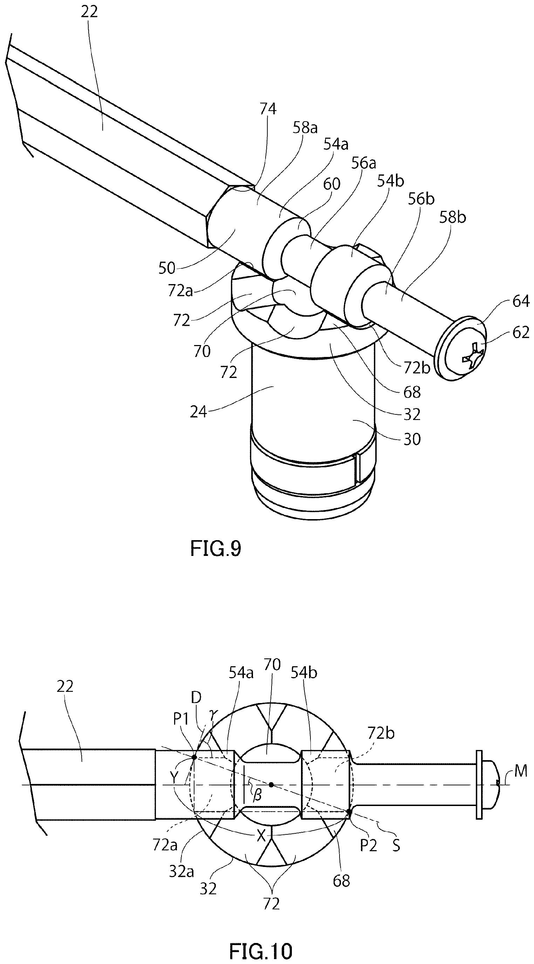

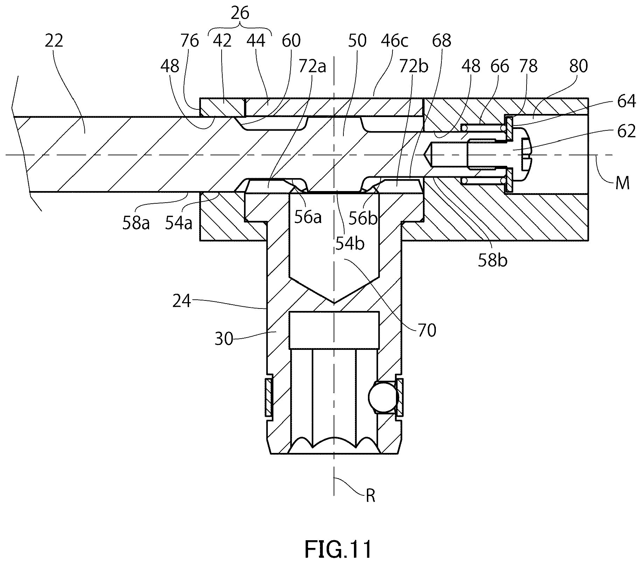

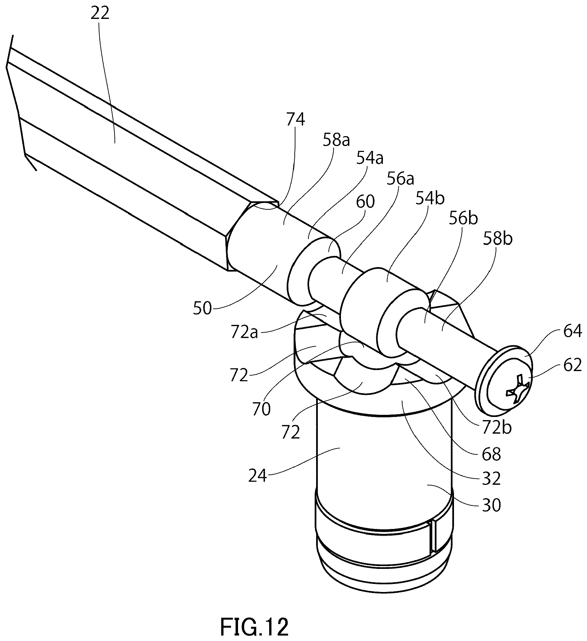

As will be clear from Figs. 8 and 9, the handle member 22 has a shaft part 50 having a circular cross-sectional shape. The shaft part 50 is formed with coupling engaging portions 54a and 54b and uncoupling portions 56a and 56b having smaller diameters than those of the coupling engaging portions 54a and 54b. More specifically, the coupling engaging portions 54a and 54b comprise a first coupling engaging portion 54a and a second coupling engaging portion 54b which are located away from each other in the direction of the longitudinal axis M. The uncoupling portions 56a and 56b comprise a first uncoupling portion 56a located between the first coupling engaging portion 54a and the second coupling engaging portion 54b and a second uncoupling portion 56b located opposite the first uncoupling portion 56a across the second coupling engaging portion 54b. In addition, a first sliding portion 58a is provided adjoining to the first coupling engaging portion 54a, and a second sliding portion 58b is provided adjoining to the second uncoupling portion 56b. In other words, the shaft part 50 has, in order along the longitudinal axis M, the first sliding portion 58a, the first coupling engaging portion 54a, the first uncoupling portion 56a, the second coupling engaging portion 54b, the second uncoupling portion 56b, and the second sliding portion 58b. The first sliding portion 58a and the first coupling engaging portion 54a are formed contiguously with the same outer diameter. Similarly, the second uncoupling portion 56b and the second sliding portion 58b are formed contiguously with the same outer diameter. Further, the first coupling engaging portion 54a is formed with an inclined surface 60 with a diameter gradually decreasing toward the first uncoupling portion 56a. As shown in Fig. 7, the first and second sliding portions 58a and 58b of the shaft part 50 are held slidably relative to the handle member holding hole 48 of the holding member 26, thereby enabling the handle member 22 to be displaced relative to the holding member 26 in the direction of the longitudinal axis M between a coupled position (Figs. 7 and 9) and an uncoupled position (Figs. 11 and 12), as will be described later. The handle member 22 has a ring member 64 secured to a distal end thereof by a screw 62. In addition, a spring 66 is held between the ring member 64 and the housing member 42. The handle member 22 is urged by the spring 66 toward the distal end side (right-hand side as seen in the figure), i.e. toward the coupled position.

The rotating shaft member 24 has, as shown in Figs. 9 and 10, a coupling end face 68 at an end thereof where the flange portion 32 is formed, the coupling end face 68 facing the shaft part 50 of the handle member 22. The coupling end face 68 has an uncoupling recess 70 formed in the center thereof, the uncoupling recess 70 being located on the rotation axis R. Accordingly, the coupling end face 68 is a circular ring-shaped surface. The coupling end face 68 is formed with three coupling recesses 72 extending in radial directions about the rotation axis R. The coupling recesses 72 extend in mutually different radial directions, respectively. The coupling recesses 72 are each formed as a pair of coupling recesses 72a and 72b located on opposite sides facing each other across the uncoupling recess 70. The coupling recesses 72 are formed as arcuate surfaces corresponding to the first and second coupling engaging portions 54a and 54b of the handle member 22.

When the handle member 22 is in the coupled position shown in Figs. 7, 9 and 10, the first and second coupling engaging portions 54a and 54b of the handle member 22 are engaged with one coupling recess 72 of the rotating shaft member 24. Specifically, the first coupling engaging portion 54a is engaged with one coupling recess 72a of the coupling recess 72, and the second coupling engaging portion 54b is engaged with the other coupling recess 72b. Thus, the handle member 22 is coupled to the rotating shaft member 24 in the direction of rotation thereof. It should be noted that the handle member 22 is held in the coupled position by the abutment of a step portion 74 (Fig. 9) provided at the rear end of the shaft part 50 against an end face 76 (Fig. 7) of the housing member 42 in a state where the handle member 22 is urged by the spring 66.

When the handle member 22 is pulled rearward (leftward as seen in the figures) to a position where the ring member 64 abuts against an abutting surface 78 of the housing member 42, to reach the uncoupled position shown in Figs. 11 and 12, the handle member 22 and the rotating shaft member 24 are uncoupled from each other. Specifically, the first coupling engaging portion 54a is disengaged from the one coupling recess 72a and positioned radially outside the rotating shaft member 24, and the second coupling engaging portion 54b is disengaged from the other coupling recess 72b and positioned to align with the uncoupling recess 70 in the direction of the rotation axis R. Further, the first uncoupling portion 56a is positioned to align with the one coupling recess 72a in the direction of the rotation axis R, and the second uncoupling portion 56b is positioned to align with the other coupling recess 72b in the direction of the rotation axis R. Consequently, the handle member 22 and the rotating shaft member 24 are uncoupled from each other. Further, because the first uncoupling portion 56a and the second uncoupling portion 56b are sized so as not to engage the coupling end face 68 of the rotating shaft member 24, the handle member 22, when in the uncoupled position, is rotatable relative to the rotating shaft member 24 about the rotation axis R. If the handle member 22 is rotated relative to the rotating shaft member 24, while being held in the uncoupled position, to a position where the shaft part 50 is substantially aligned with another coupling recess 72, and the handle member 22 is returned to the coupled position, then the handle member 22 can be recoupled to the rotating shaft member 24 at an angle different from the previous one. It should be noted that if the handle member 22 is displaced from the uncoupled position to the coupled position in a state where the coupling recess 72 is deviated from the direction of the longitudinal axis M of the shaft part 50, the inclined surface 60 of the first coupling engaging portion 54a is first engaged with the rotating shaft member 24. When the amount of deviation is small, the inclined surface 60 is slidingly engaged with the coupling recess 72 at an outer peripheral surface 32a of the flange portion 32 of the rotating shaft member 24, thereby allowing the handle member 22 to be rotated relative to the rotating shaft member 24. Thus, the first coupling engaging portion 54a is guided into the coupling recess 72, thereby enabling the handle member 22 to be displaced to the coupled position.

The first coupling engaging portion 54a of the handle member 22, when in the coupled position, is engaged with one coupling recess 72 of the rotating shaft member 24, and, when in the uncoupled position, is located in the handle member holding hole 48 of the housing member 42. That is, when the handle member 22 is displaced between the coupled position and the uncoupled position, the first coupling engaging portion 54a functions, together with the first sliding portion 58a, as a part of a sliding portion slidable relative to the housing member 42. Similarly, the second uncoupling portion 56b, when in the uncoupled position, is located to face the coupling end face 68 of the rotating shaft member 24, and, when in the coupled position, is located in the handle member holding hole 48 of the housing member 42. That is, when the handle member 22 is displaced between the coupled position and the uncoupled position, the second uncoupling portion 56b functions, together with the second sliding portion 58b, as a part of a sliding portion slidable relative to the housing member 42. Thus, by using the first coupling engaging portion 54a and the second uncoupling portion 56b also as sliding portions, respectively, it is possible to shorten the shaft part 50, and the holding member 26 can also be reduced in size correspondingly.

In order to enable the handle member 22 to be smoothly displaced between the coupled position and the uncoupled position, the coupling recesses 72 of the rotating shaft member 24 are made slightly larger than the first and second coupling engaging portions 54a and 54b. Therefore, when the handle member 22 is placed in the coupled position in a state where one coupling recess 72 is completely aligned with the direction of the longitudinal axis M, slight gaps are produced between the first and second coupling engaging portions 54a and 54b and the coupling recess 72. Accordingly, when the handle member 22 is rotated in the coupled position, the coupling recess 72 is in a direction slightly inclined with respect to the longitudinal axis M. Thus, the handle member 22 is substantially in point contact with the one coupling recess 72a at the first coupling engaging portion 54a and is substantially in point contact with the other coupling recess 72b at the second coupling engaging portion 54b. When the handle member 22 is rotated clockwise as seen in Fig. 10, the contact points P1 and P2 are, as shown in Fig. 10, located on the outer peripheral surface 32a of the enlarged-diameter flange portion 32 of the rotating shaft member 24 at the associated coupling recesses 72. The distance Y between the contact points P1 and P2 in a direction perpendicular to the longitudinal axis M is shorter than the distance X between the contact points P1 and P2 in the direction of the longitudinal axis M, and the included angle β between the straight line S connecting the contact points P1 and P2 and the longitudinal axis M as seen in the direction of the rotation axis R is approximately 20 degrees. Accordingly, the angle γ formed between the direction D in which the first and second coupling engaging portions 54a and 54b are pressed against the coupling recess 72 at the contact points P1 and P2, respectively, and the coupling recess 72 is approximately 70 degrees. In the handle device 20, the angle γ is a relatively large angle; therefore, deformation is unlikely to occur at the contact points P1 and P2. Even if deformation occurs, it is possible to reduce the effect of the deformation on the amount of deviation of the coupling recess 72 from the longitudinal axis M in the angular direction in the coupled position. It should be noted that the above-mentioned specific angles in this embodiment are given merely for exemplary purposes and may be changed to other angles. It is, however, desirable that the included angle β should be smaller than 45 degrees, and hence the angle γ should be larger than 45 degrees. Further, the contact points P1 and P2 are located on the outer peripheral surface 32a of the flange portion 32 of the rotating shaft member 24, as has been described above, and thus greatly away from the rotation axis R. It is therefore possible to reduce the magnitude of stress applied to each of the contact points P1 and P2 relative to the turning moment applied to the handle member 22. For this reason also, deformation is unlikely to occur at the contact points P1 and P2.

Although the handle device has three coupling recesses formed in the rotating shaft member, as has been described above, a plurality of such coupling recesses may be provided to enable the handle member to be coupled at a larger number of different angles. Even in such a case, the positions of the above-described contact points P1 and P2 will not change, and there will also be no change in the direction D in which the first and second coupling engaging portions 54a and 54b and each coupling recess 72 are pressed against each other. Accordingly, the angle γ will not change, either. In contrast to this, in the above-described conventional handle device, the direction d decreases according as the number of couplable directions is increased, as has been described above. According to the structure of the handle device of the present invention, it is possible to increase the number of couplable directions easily while maintaining the angle γ to be large.

The assembly of the handle device 20 is carried out as follows. First, the rotating shaft member 24 is inserted into the rotating shaft holding hole 46 of the housing member 42 from one opening 46c thereof. Next, the cap member 44 is inserted into the rotating shaft holding hole 46 such that the insertion groove 52 of the cap member 44 is aligned with the handle member holding hole 48 of the housing member 42. Subsequently, the shaft part 50 of the handle member 22 is inserted into the handle member holding hole 48 of the handle member 22. At this time, the shaft part 50 is also inserted into the insertion groove 52 of the cap member 44. Next, the spring 66 is inserted into a spring housing part 80 of the housing member 42, and the ring member 64 is secured to the handle member 22 by the screw 62. Finally, the spherical locking element 38 and the plate spring 40 are attached to the rotating shaft member 24 to complete the assembling operation. Only one screw is used in the handle device 20. Because the cap member 44 is configured to be held by the handle member 22, in particular, the number of constituent parts is reduced, and the assembling operation is also facilitated. In addition, the area of coupling engagement between the handle member 22 and the rotating shaft member 24 is covered with the holding member 26 so as not to be exposed to the outside, thereby preventing entry of dust and other contaminations into the coupling engagement area.

Although some embodiments of the present invention have been described above, the present invention is not limited to the described embodiments. For example, the coupling engaging portions of the handle member may comprise a single portion continuing from the first coupling engaging portion to the second coupling engaging portion, and the uncoupling portions may comprise a single portion formed at the position of the second uncoupling portion. In this case, the rotating shaft member need not be provided with the uncoupling recess, and the coupling recesses can be replaced with a single continuous coupling recess extending in the radial direction. It should, however, be noted that the distance required to displace the handle member from the coupled position to the uncoupled position becomes approximately equal to the diameter of the flange portion of the rotating shaft member. Consequently, it is necessary to displace the handle member through a distance approximately three times as long as the distance in the above-described embodiment. In addition, the shaft part of the handle member need not have a circular cross-sectional shape but may have other shape, e.g. a quadrangular or hexagonal cross-sectional shape, and the coupling recesses may also have other shape in conformity to the cross-sectional shape of the shaft part of the handle member. Further, the handle device of the present invention is also applicable to power tools and hand tools in addition to drilling machines.

### List of Reference Signs:

1: handle device
2: rotating shaft member
3: handle member
4: holding member
5: coupling engaging portion
5a: engaging surfaces
5b: angle portions
6: coupling hole
6a: circular hole portion
6b: slot portion
6c: side surfaces
d: direction
m: longitudinal axis
n: diagonal line
r: rotation axis
x: distance
γ: distance
α: angle
10: drilling machine
12: drilling machine body
14: annular cutter (drilling tool)
20: handle device
22: handle member
24: rotating shaft member
26: holding member
28: grip
30: rotating shaft body portion
32: flange portion
32a: outer peripheral surface
34: lower end portion
36: socket hole
38: spherical locking element
40: plate spring
42: housing member
44: cap member
44a: lower surface
46: rotating shaft holding hole
46a: large-diameter portion
46b: small-diameter portion
46c: opening
48: handle member holding hole
50: shaft part
52: insertion groove
54a: first coupling engaging portion
54b: second coupling engaging portion
56a: first uncoupling portion
56b: second uncoupling portion
58a: first sliding portion
58b: second sliding portion
60: inclined surface
62: screw
64: ring member
66: spring
68: coupling end face
70: uncoupling recess
72: coupling recesses
72a: one coupling recess
72b: the other coupling recess
74: step portion
76: end face
78: abutting surface
80: spring housing part
D: direction
M: longitudinal axis
P1: contact point
P2: contact point
R: rotation axis
S: straight line
X: distance
Y: distance
W: workpiece
β: included angle
γ: angle

## Claims

1. A handle device (20) comprising:
a holding member (26);
a handle member (22) having a shaft part (50) held by the holding member (26) displaceably in a direction of a longitudinal axis (M); and
a rotating shaft member (24) held by the holding member (26) rotatably about a rotation axis (R) substantially perpendicular to the longitudinal axis (M),
**characterized in that**
the rotating shaft member (24) having a coupling end face (68) facing the shaft part (50) of the handle member (22), the rotating shaft member (24) having in the coupling end face (68) a coupling recess (72) extending in a radial direction about the rotation axis (R);
wherein the handle member (22) has on the shaft part (50) a coupling engaging portion (54a,54b) engageable with the coupling recess (72), and the handle member (22) is displaceable between a coupled position where the coupling engaging portion (54a,54b) is engaged with the coupling recess (72) at positions located at opposite sides of the rotation axis (R) in the direction of the longitudinal axis (M), thereby allowing the handle member (22) to be coupled to the rotating shaft member (24) in a direction of rotation of the rotating shaft member (24), and an uncoupled position where the handle member (22) is displaced from the coupled position in the direction of the longitudinal axis (M) to uncouple the coupling engaging portion (54a,54b) and the coupling recess (72) from each other, thereby enabling the handle member (22) to be rotated relative to the rotating shaft member (24) about the rotation axis (R).

2. The handle device of claim 1, wherein the handle member (22) further has on the shaft part (50) an uncoupling portion (56a,56b) not engageable with the coupling recess (72), the coupling engaging portion (54a,54b) has first and second coupling engaging portions (54a,54b) located away from each other in the direction of the longitudinal axis (M), and the uncoupling portion (56a,56b) has a first uncoupling portion (56a) located between the first coupling engaging portion (54a) and the second coupling engaging portion (54b);
wherein the rotating shaft member (24) has an uncoupling recess(70), and the coupling recess (72) is a pair of coupling recesses (72) located at opposite sides of the uncoupling recess (70);
wherein when the handle member (22) is in the coupled position, the first coupling engaging portion (54a) is engaged with one coupling recess (72) of the pair of coupling recesses (72a,72b), and the second coupling engaging portion (54b) is engaged with the other coupling recess (70) of the pair of coupling recesses;
wherein when the handle member (22) is displaced to the uncoupled position, the second coupling engaging portion (54b) is disengaged from the other coupling recess (72) and positioned to align with the uncoupling recess (70) in a direction of the rotation axis (R), and the first uncoupling portion (56a) is positioned to align with the one coupling recess (72) in the direction of the rotation axis (R).

3. The handle device of claim 2, wherein the uncoupling portion (56a,56b) further has a second uncoupling portion (56b) located opposite the first uncoupling portion (56a) across the second coupling engaging portion (54b);
wherein the shaft part (50) has, in order along the longitudinal axis (M), a first sliding portion (58a) slidably held by the holding member (26), the first coupling engaging portion (54a), the first uncoupling portion (56a), the second coupling engaging portion (54b), the second uncoupling portion (56b), and a second sliding portion (58b) slidably held by the holding member (26); and
wherein when the handle member (22) is displaced to the uncoupled position, the second uncoupling portion (56b) is positioned to align with the other coupling recess (72) in the direction of the rotation axis (R).

4. The handle device of claim 3, wherein the first sliding portion (58a) and the first coupling engaging portion (54a) have a same outer diameter, and the second sliding portion (58b) and the second uncoupling portion (54b) have a same outer diameter, so that when the handle member (22) is in the coupled position, the second uncoupling portion (56b) is slidably held by the holding member (26), whereas when the handle member (2) is in the uncoupled position, the first coupling engaging portion (54a) is slidably held by the holding member (26).

5. The handle device of any one of claims 2 to 4, wherein the first coupling engaging portion (54a) of the handle member (22) has an inclined surface (60) with a diameter gradually decreasing toward the first uncoupling portion (56a) , so that when the handle member (22) is displaced from the uncoupled position to the coupled position in a state where the coupling recess (72) is deviated from the direction of the longitudinal axis (M) of the shaft part (50) , the inclined surface (60) is slidingly engaged with the coupling recess (72), causing the handle member (22) to rotate relative to the rotating shaft member (24), thereby allowing the coupling engaging portion (54a,54b) to be guided into the coupling recess (72).

6. The handle device of any one of claims 1 to 5, wherein when the handle member (22) is rotated about the rotation axis (R) in the coupled position, a contact point between the coupling engaging portion (54a,54b) and the coupling recess (72) at one side of the rotation axis (R) in the direction of the longitudinal axis (M) and a contact point between the coupling engaging portion (54a,54b) and the coupling recess (72) at an other side of the rotation axis (R) in the direction of the longitudinal axis (M) are located at respective positions where a distance between the contact points in a direction perpendicular to the longitudinal axis (M) is shorter than a distance between the contact points in the direction of the longitudinal axis (M).

7. The handle device of any one of claims 1 to 6, further comprising a spring (66) urging the handle member (22) toward the coupled position.

8. The handle device of any one of claims 1 to 7, further comprising a plurality of the coupling recesses (72) respectively extending in mutually different radial directions about the rotation axis (R).

9. The handle device of any one of claims 1 to 8, wherein the rotating shaft member (24) has a rotating shaft body portion (30) extending in the direction of the rotation axis (R), and a flange portion (32) having a diameter enlarged radially outward from the rotating shaft body portion (30) to constitute a part of the coupling end face (68); and
wherein the holding member (26) includes:
a housing member (42) having a rotating shaft holding hole (46) extending therethrough in the direction of the rotation axis to rotatably hold the rotating shaft member, and a handle member holding hole (48) extending therethrough in the direction of the longitudinal axis (M) across the rotating shaft holding hole (46) to hold the shaft part (50) of the handle member (22) displaceably in the direction of the longitudinal axis (M), the rotating shaft holding hole (46) having a large-diameter portion (46a) receiving the flange portion (32), and a small-diameter portion (46b) having a diameter smaller than that of the flange portion (32) and allowing the rotating shaft body portion (30) to pass therethrough; and
a cap member (44) inserted into the large-diameter portion (46a) of the rotating shaft holding hole (46) to close one opening of the rotating shaft holding hole (46) and to hold the flange portion (32) of the rotating shaft member (24) in the large-diameter portion (46a);
wherein the cap member (44) has an insertion groove extending in the direction of the longitudinal axis (M), the shaft part (50) of the handle member (22) is disposed to extend through the insertion groove, and the shaft part (50) is engaged with the insertion groove in the direction of the rotation axis (R), thereby preventing the cap member (44) from coming off from the one opening side of the rotating shaft holding hole (46).

10. A drilling machine (10) comprising:
a drilling machine body (12); and
a drilling tool (14) attached to the drilling machine body (12);
**characterized by** a handle device (20) of any one of claims 1 to 9, the handle device (20) being attached to the drilling machine body (12), so that the drilling tool (14) is displaced by rotating the handle member (20) in the coupled position.

## Patentansprüche

1. Griffvorrichtung (20), die Folgendes aufweist:
ein Halteelement (26);
ein Griffelement (22) mit einem Schaftteil (50), welches von dem Halteelement (26) verschiebbar in einer Richtung einer Längsachse (M) gehalten wird; und
ein Drehwellenelement (24), das vom Halteelement (26) drehbar um eine Drehachse (R) im Wesentlichen senkrecht zu der Längsachse (M) gehalten wird,
**dadurch gekennzeichnet, dass**
das Drehwellenelement (24) eine Kupplungsendfläche (68) hat, die zum Schaftteil (50) des Griffelementes (22) weist, wobei das Drehwellenelement (24) in der Kupplungsendfläche (68) eine Kupplungsvertiefung (72) aufweist, die sich in radialer Richtung um die Drehachse (R) erstreckt;
wobei das Griffelement (22) an dem Schaftteil (50) einen Kupplungseingriffsteil (54a, 54b) hat, der mit der Kupplungsvertiefung (72) in Eingriff bringbar ist, und wobei das Griffelement (22) zwischen einer gekoppelten Position, wo der Kupplungseingriffsteil (54a, 54b) in Eingriff mit der Kupplungsvertiefung (72) an Positionen ist, die an gegenüberliegenden Seiten der Drehachse (R) in der Richtung der Längsachse (M) angeordnet sind, wodurch gestattet wird, dass das Griffelement (22) mit dem Drehkupplungselement (24) in einer Drehrichtung des Drehwellenelementes (24) gekoppelt wird, und einer entkoppelten Position, wo das Griffelement (22) von der gekoppelten Position in Richtung der Längsachse (M) verschoben ist, um den Kupplungseingriffsteil (54a, 54b) und die Kupplungsvertiefung (72) voneinander zu entkoppeln, wodurch ermöglicht wird, dass das Griffelement (22) relativ zu dem Drehwellenelement (24) um die Drehachse (R) gedreht wird.

2. Griffvorrichtung nach Anspruch 1, wobei das Griffelement (22) weiter an dem Schaftteil (50) einen Entkoppelungsteil (56a, 56b) hat, der nicht mit der Kupplungsvertiefung (72) in Eingriff bringbar ist, wobei der Kupplungseingriffsteil (54a, 54b) erste und zweite Kupplungseingriffsteile (54a, 54b) hat, die in der Richtung der Längsachse (M) voneinander entfernt angeordnet sind, und wobei der Entkoppelungsteil (56a, 56b) einen ersten Entkoppelungsteil (56a) hat, der zwischen dem ersten Kupplungseingriffsteil (54a) und dem zweiten Kupplungseingriffsteil (54b) angeordnet ist;
wobei das Drehwellenelement (24) eine Entkoppelungsvertiefung (70) hat, und wobei die Kupplungsvertiefung (72) ein Paar von Kupplungsvertiefungen (72) ist, die an gegenüberliegenden Seiten der Entkoppelungsvertiefung (70) angeordnet sind;
wobei, wenn das Griffelement (22) in der gekoppelten Position ist, der erste Kupplungseingriffsteil (54a) mit einer Kupplungsvertiefung (72) des Paares von Kupplungsvertiefungen (72a, 72b) in Eingriff ist, und wobei der zweite Kupplungseingriffsteil (54b) mit der anderen Kupplungsvertiefung (72) des Paares von Kupplungsvertiefungen in Eingriff ist;
wobei, wenn das Griffelement (22) zu der entkoppelten Position verschoben wird, der zweite Kupplungseingriffsteil (54b) außer Eingriff von der Kupplungsvertiefung (72) ist und so positioniert ist, dass er mit der Entkoppelungsvertiefung (70) in einer Richtung der Drehachse (R) ausgerichtet ist, und wobei der erste Entkoppelungsteil (56a) so positioniert ist, dass er mit der einen Kupplungsvertiefung (72) in der Richtung der Drehachse (R) ausgerichtet ist.

3. Griffvorrichtung nach Anspruch 2, wobei der Entkoppelungsteil (56a, 56b) weiter einen zweiten Entkoppelungsteil (56b) hat, der gegenüberliegend zum ersten Entkopplungsteil (56a) über den zweiten Kupplungseingriffsteil (54b) angeordnet ist;
wobei der Schaftteil (50) in der Reihenfolge entlang der Längsachse (M) einen ersten Gleitteil (58a) hat, der von dem Halteelement (26) verschiebbar gehalten wird, weiter den ersten Kupplungseingriffsteil (54a), den ersten Entkoppelungsteil (56a), den zweiten Kupplungseingriffsteil (54b), den zweiten Entkoppelungsteil (56b) und einen zweiten Gleitteil (58b), der verschiebbar durch das Halteelement (26) gehalten wird; und
wobei, wenn das Griffelement (22) in die entkoppelte Position verschoben ist, der zweite Entkopplungsteil (56b) so positioniert ist, dass er mit der anderen Kupplungsvertiefung (72) in Richtung der Drehachse (R) ausgerichtet ist.

4. Griffvorrichtung nach Anspruch 3, wobei der erste Gleitteil (58a) und der erste Kupplungseingriffsteil (54a) einen gleichen Außendurchmesser haben, und wobei der zweite Gleitteil (58b) und der zweiten Entkoppelungsteil (54b) einen gleichen Außendurchmesser haben, so dass, wenn das Griffelement (22) in der gekoppelten Position ist, der zweite Entkoppelungsteil (56b) verschiebbar von dem Halteelement (26) gehalten wird, während wenn das Griffelement (22) in der entkoppelten Position ist, der erste Kupplungseingriffsteil (54a) von dem Halteelement (26) verschiebbar gehalten wird.

5. Griffvorrichtung nach einem der Ansprüche 2 bis 4, wobei der erste Kupplungseingriffsteil (54a) des Griffelementes (22) eine geneigte Oberfläche (60) mit einem Durchmesser hat, der allmählich zu dem ersten Entkoppelungsteil (56a) abnimmt, so dass, wenn das Griffelement (22) von der entkoppelten Position in die gekoppelten Position in einem Zustand verschoben wird, wo die Kupplungsvertiefung (72) von der Richtung der Längsachse (M) des Schaftteils (50) abgewichen ist, die geneigte Oberfläche (60) gleitend mit der Kupplungsvertiefung (72) in Eingriff kommt, was bewirkt, dass das Griffelement (22) sich relativ zum Drehwellenelement (24) dreht, wodurch gestattet wird, dass der Kupplungseingriffsteil (54a, 54b) in die Kupplungsvertiefung (72) geleitet wird.

6. Griffvorrichtung nach einem der Ansprüche 1 bis 5, wobei, wenn das Griffelement (22) um die Drehachse (R) in der gekoppelten Position gedreht wird, ein Kontaktpunkt zwischen dem Kupplungseingriffsteil (54a, 54b) und der Kupplungsvertiefung (72) an einer Seite der Drehachse (R) in der Richtung der Längsachse (M) und ein Kontaktpunkt zwischen dem Kupplungseingriffsteil (54a, 54b) und der Kupplungsvertiefung (72) an einer anderen Seite der Drehachse (R) in der Richtung der Längsachse (M) an jeweiligen Positionen angeordnet sind, wo eine Distanz zwischen den Kontaktpunkten in einer Richtung senkrecht zur Längsachse (M) kürzer ist als eine Distanz zwischen den Kontaktpunkten in der Richtung der Längsachse (M).

7. Griffvorrichtung nach einem der Ansprüche 1 bis 6, die weiter eine Feder (66) aufweist, welche das Griffelement (22) zu der gekoppelten Position hin drückt.

8. Griffvorrichtung nach einem der Ansprüche 1 bis 7, die weiter eine Vielzahl von Kupplungsvertiefungen (72) aufweist, die sich jeweils in gegenseitig unterschiedlichen radialen Richtungen um die Drehachse (R) erstrecken.

9. Griffvorrichtung nach einem der Ansprüche 1 bis 8, wobei das Drehwellenelement (24) einen Drehwellenkörperteil (30) hat, der sich in der Richtung der Drehachse (R) erstreckt, und einen Flanschteil (32) mit einem Durchmesser, der radial nach außen von dem Drehwellenkörperteil (30) vergrö-ßert ist, um einen Teil der Kupplungsendfläche (68) zu bilden; und
wobei das Halteelement (26) Folgendes aufweist:
ein Gehäuseelement (42) mit einem Drehwellenhalteloch (46), welches sich dort hindurch in der Richtung der Drehachse erstreckt, um das Drehwellenelement drehbar zu halten, und ein Griffelementhalteloch (48), welches sich dort hindurch in der Richtung der Längsachse (M) über das Drehwellenhalteloch (46) erstreckt, um den Schaftteil (50) des Griffelementes (22) verschiebbar in der Richtung der Längsachse (M) zu halten, wobei das Drehwellenhalteloch (46) einen Teil (46a) mit großem Durchmesser hat, der den Flanschteil (32) aufnimmt, und einen Teil (46b) mit kleinem Durchmesser mit einem kleineren Durchmesser als jenem des Flanschteils (32), was gestattet, dass der Drehwellenkörperteil (30) dort hindurch verläuft; und
ein Kappenelement (44), welches in dem Teil (46a) mit großem Durchmesser des Drehwellenhaltelochs (46) eingeführt ist, um eine Öffnung des Drehwellenhaltelochs (46) zu schließen und den Flanschteil (32) des Drehwellenelementes (24) in dem Teil (46a) mit großem Durchmesser zu halten;
wobei das Kappenelement (44) eine Einführungsnut hat, die sich in der Richtung der Längsachse (M) erstreckt, wobei der Schaftteil (50) des Griffelementes (22) so angeordnet ist, dass er sich durch die Einführungsnut erstreckt, und wobei der Schaftteil (50) mit der Einführungsnut in der Richtung der Drehachse (R) in Eingriff ist, wodurch verhindert wird, dass das Kappenelement (44) aus der einen Öffnungsseite des Drehwellenhaltelochs (46) herauskommt.

10. Bohrmaschine (10), die Folgendes aufweist:
einen Bohrmaschinenkörper (12); und
ein Bohrwerkzeug (14), das an dem Bohrmaschinenkörper (12) befestigt ist;
**gekennzeichnet durch** eine Griffvorrichtung (20) nach einem der Ansprüche 1 bis 9, wobei die Griffvorrichtung (20) an dem Bohrmaschinenkörper (12) so befestigt ist, dass das Bohrwerkzeug (14) durch Drehen des Griffelementes (22) in der gekoppelten Position verschoben wird.

## Revendications

1. Dispositif de poignée (20) comprenant :
un élément de maintien (26) ;
un élément de poignée (22) ayant une partie d'arbre (50) maintenue par l'élément de maintien (26) de façon mobile dans une direction d'un axe longitudinal (M) ; et
un élément d'arbre à rotation (24) maintenu par l'élément de maintien (26) de façon rotative autour d'un axe de rotation (R) sensiblement perpendiculaire à l'axe longitudinal (M),
**caractérisé en ce que**
l'élément d'arbre à rotation (24) a une face d'extrémité d'accouplement (68) faisant face à la partie d'arbre (50) de l'élément de poignée (22), l'élément d'arbre à rotation (24) ayant dans la face d'extrémité d'accouplement (68) un évidement d'accouplement (72) s'étendant dans une direction radiale autour de l'axe de rotation (R) ;
dans lequel l'élément de poignée (22) a sur la partie d'arbre (50) une partie d'engagement d'accouplement (54a, 54b) pouvant être engagée avec l'évidement d'accouplement (72), et l'élément de poignée (22) est déplaçable entre une position couplée dans laquelle la partie d'engagement d'accouplement (54a, 54b) est engagée avec l'évidement d'accouplement (72) à des positions situées sur des côtés opposés de l'axe de rotation (R) dans la direction de l'axe longitudinal (M), permettant ainsi à l'élément de poignée (22) d'être couplé à l'élément d'arbre à rotation (24) dans une direction de rotation de l'élément d'arbre à rotation (24), et une position désaccouplée dans laquelle l'élément de poignée (22) est déplacé de la position couplée dans la direction de l'axe longitudinal (M) pour désaccoupler la partie d'engagement d'accouplement (54a, 54b) et l'évidement d'accouplement (72) l'un de l'autre, permettant ainsi à l'élément de poignée (22) d'être tourné par rapport à l'élément d'arbre à rotation (24) autour de l'axe de rotation (R).

2. Dispositif de poignée selon la revendication 1, dans lequel l'élément de poignée (22) comporte en outre sur la partie d'arbre (50) une partie de désaccouplement (56a, 56b) qui ne peut pas être engagée avec l'évidement d'accouplement (72), la partie d'engagement d'accouplement (54a, 54b) a des première et deuxième parties d'engagement d'accouplement (54a, 54b) éloignées l'une de l'autre dans la direction de l'axe longitudinal (M), et la partie de désaccouplement (56a, 56b) a une première partie de désaccouplement (56a) située entre la première partie d'engagement d'accouplement (54a) et la deuxième partie d'engagement d'accouplement (54b) ;
dans lequel l'élément d'arbre à rotation (24) a un évidement de désaccouplement (70), et l'évidement d'accouplement (72) est une paire d'évidements d'accouplement (72) situés sur des côtés opposés de l'évidement de désaccouplement (70) ;
dans lequel, lorsque l'élément de poignée (24) est dans la position accouplée, la première partie d'engagement d'accouplement (54a) est engagée avec un évidement d'accouplement (72) de la paire d'évidements d'accouplement (72a, 72b), et la deuxième partie d'engagement d'accouplement (54b) est engagée avec l'autre évidement d'accouplement (72) de la paire d'évidements d'accouplement ;
dans lequel, lorsque l'élément de poignée (22) est déplacé vers la position désaccouplée, la deuxième partie d'engagement d'accouplement (54b) est désengagée de l'autre évidement d'accouplement (72) et positionnée pour s'aligner avec l'évidement de désaccouplement (70) dans une direction de l'axe de rotation (R), et la première partie de désaccouplement (56a) est positionnée pour s'aligner avec l'évidement d'accouplement (72) dans la direction de l'axe de rotation (R).

3. Dispositif de poignée selon la revendication 2, dans lequel la partie de désaccouplement (56a, 56b) a en outre une deuxième partie de désaccouplement (56b) située à l'opposé de la première partie de désaccouplement (56a) à travers la deuxième partie d'engagement de couplage (54b) ;
dans lequel la partie d'arbre (50) a, dans l'ordre le long de l'axe longitudinal (M), une première partie coulissante (58a) maintenue de façon coulissante par l'élément de maintien (26), la première partie d'engagement de couplage (54a), la première partie de désaccouplement (56a), la deuxième partie d'engagement de couplage (54b), la deuxième partie de désaccouplement (56b) et une deuxième partie coulissante (58b) maintenue de façon coulissante par l'élément de maintien (26) ; et
dans lequel, lorsque l'élément de poignée (22) est déplacé vers la position désaccouplée, la deuxième partie de désaccouplement (56b) est positionnée pour s'aligner avec l'autre évidement d'accouplement (72) dans la direction de l'axe de rotation (R).

4. Dispositif de poignée selon la revendication 3, dans lequel la première partie coulissante (58a) et la première partie d'engagement de couplage (54a) ont le même diamètre extérieur, et la deuxième partie coulissante (58b) et la deuxième partie de désaccouplement (54b) ont le même diamètre extérieur, de sorte que, lorsque l'élément de poignée (22) est dans la position couplée, la deuxième partie de désaccouplement (56b) soit maintenue de façon coulissante par l'élément de maintien (26), tandis que, lorsque l'élément de poignée (22) est dans la position désaccouplée, la première partie d'engagement de couplage (54a) soit maintenue de façon coulissante par l'élément de maintien (26).

5. Dispositif de poignée selon l'une quelconque des revendications 2 à 4, dans lequel la première partie d'engagement de couplage (54a) de l'élément de poignée (22) a une surface inclinée (60) avec un diamètre diminuant progressivement vers la première partie de désaccouplement (56a), de sorte que, lorsque l'élément de poignée (22) est déplacé de la position désaccouplée à la position accouplée dans un état où l'évidement d'accouplement (72) est dévié de la direction de l'axe longitudinal (M) de la partie d'arbre (50), la surface inclinée (60) soit engagée de façon coulissante avec l'évidement d'accouplement (72), provoquant la rotation de l'élément de poignée (22) par rapport à l'élément d'arbre à rotation (24), permettant ainsi de guider la partie d'engagement d'accouplement (54a, 54b) dans l'évidement d'accouplement (72).

6. Dispositif de poignée selon l'une quelconque des revendications 1 à 5, dans lequel, lorsque l'élément de poignée (22) est tourné autour de l'axe de rotation (R) dans la position accouplée, un point de contact entre la partie d'engagement d'accouplement (54a, 54b) et l'évidement d'accouplement (72) d'un côté de l'axe de rotation (R) dans la direction de l'axe longitudinal (M) et un point de contact entre la partie d'engagement d'accouplement (54a, 54b) et l'évidement d'accouplement (72) d'un autre côté de l'axe de rotation (R) dans la direction de l'axe longitudinal (M) sont situés à des positions respectives où une distance entre les points de contact dans une direction perpendiculaire à l'axe longitudinal (M) est plus courte qu'une distance entre les points de contact dans la direction de l'axe longitudinal (M).

7. Dispositif de poignée selon l'une quelconque des revendications 1 à 6, comprenant en outre un ressort (66) sollicitant l'élément de poignée (22) vers la position couplée.

8. Dispositif de poignée selon l'une quelconque des revendications 1 à 7, comprenant en outre une pluralité d'évidements d'accouplement (72) s'étendant respectivement dans des directions radiales mutuellement différentes autour de l'axe de rotation (R).

9. Dispositif de poignée selon l'une quelconque des revendications 1 à 8, dans lequel l'élément d'arbre à rotation (24) a une partie de corps d'arbre à rotation (30) s'étendant dans la direction de l'axe de rotation (R), et une partie de bride (32) ayant un diamètre élargi radialement vers l'extérieur depuis la partie de corps d'arbre à rotation (30) pour constituer une partie de la face d'extrémité d'accouplement (68) ; et
dans lequel l'élément de maintien (26) comporte :
un élément de logement (42) ayant un orifice de maintien d'arbre à rotation (46) s'étendant à travers celui-ci dans la direction de l'axe de rotation pour maintenir en rotation l'élément d'arbre à rotation, et un orifice de maintien d'élément de poignée (48) s'étendant à travers celui-ci dans la direction de l'axe longitudinal (M) à travers l'orifice de maintien d'arbre à rotation (46) pour maintenir la partie d'arbre (50) de l'élément de poignée (22) de façon à pouvoir être déplacée dans la direction de l'axe longitudinal (M), l'orifice de maintien d'arbre à rotation (46) ayant une partie à grand diamètre (46a) recevant la partie de bride (32), et une partie à petit diamètre (46b) ayant un diamètre plus petit que celui de la partie de bride (32) et permettant à la partie de corps d'arbre à rotation (30) de la traverser ; et
un élément de capuchon (44) inséré dans la partie à grand diamètre (46a) de l'orifice de maintien de l'arbre à rotation (46) pour fermer une ouverture de l'orifice de maintien de l'arbre à rotation (46) et pour maintenir la partie de bride (32) de l'élément d'arbre à rotation (24) dans la partie à grand diamètre (46a) ;
dans lequel l'élément de capuchon (44) a une rainure d'insertion s'étendant dans la direction de l'axe longitudinal (M), la partie d'arbre (50) de l'élément de poignée (22) est disposée pour s'étendre à travers la rainure d'insertion, et la partie d'arbre (50) est engagée avec la rainure d'insertion dans la direction de l'axe de rotation (R), empêchant ainsi l'élément de capuchon (44) de se détacher du premier côté d'ouverture de l'orifice de maintien d'arbre à rotation (46).

10. Perceuse (10) comprenant :
un corps de perceuse (12) ; et
un outil de perçage (14) fixé au corps de perceuse (12) ;
**caractérisé par** un dispositif de poignée (20) selon l'une quelconque des revendications 1 à 9, le dispositif de poignée (20) étant fixé au corps de perceuse (12), de sorte que l'outil de perçage (14) soit déplacé en faisant tourner l'élément de poignée (20) dans la position couplée.
